# EUROPÄISCHE PATENTSCHRIFT

(11) **EP 1 957 299 B1**
(45) Veröffentlichungstag und Bekanntmachung des Hinweises auf die Patenterteilung: **24.02.2010**
(21) Anmeldenummer: 06793629.4
(22) Anmeldetag: 19.09.2006
(51) Int. Cl.: B60H 1/00

(54) **VORRICHTUNG ZUR VERBINDUNG VON LUFTKANÄLEN, KRAFTFAHRZEUG-TÜR, KRAFTFAHRZEUG-SÄULE UND KRAFTFAHRZEUG-INNENVERKLEIDUNGSTEIL**
DEVICE FOR CONNECTING AIR DUCTS, MOTOR VEHICLE DOOR, MOTOR VEHICLE PILLAR AND MOTOR VEHICLE INNER LINING PART
DISPOSITIF POUR RACCORDER DES CONDUITES D'AIR, PORTE DE VEHICULE AUTOMOBILE, COLONNE DE VEHICULE AUTOMOBILE, ET ELEMENT D'HABILLAGE INTERIEUR DE VEHICULE AUTOMOBILE

(30) Priorität: 28.11.2005 DE 102005056891
(43) Veröffentlichungstag der Anmeldung: 20.08.2008
(73) Patentinhaber: Faurecia Innenraum Systeme GmbH, 76767 Hagenbach (DE)
(72) Erfinder: SCHWEITZER, MARCO, 79291 Medringen (DE)
(74) Vertreter: Richardt, Markus Albert
(86) Internationale Anmeldenummer: PCT/EP2006/066492
(87) Internationale Veröffentlichungsnummer: WO 2007/060042

(56) Entgegenhaltungen:
- EP-A1- 0 553 482
- DE-A1- 10 137 998
- DE-A1- 10 322 878
- DE-A1- 19 926 380
- DE-U- 1 929 373
- FR-A- 2 554 899

## Beschreibung

Die vorliegende Erfindung betrifft eine Vorrichtung zur Verbindung von Luftkanälen, insbesondere in einem Kraftfahrzeug, sowie eine Kraftfahrzeug-Tür, eine Kraftfahrzeug-Säule und ein Kraftfahrzeug-Innenverkleidungsteil, insbesondere eine Instrumententafel.

Es ist bekannt zur verbesserten Klimatisierung des Vorraumes in einem Kraftfahrzeug Luft nicht nur über einen Kanal in der Mitte des Fahrzeugs auf dem Tunnel in den rückwärtigen Bereich des Fahrzeugs zu führen, sondern auch seitlich, durch einen Luftkanal über die jeweilige Vordertür und die sogenannte B-Säule. Von der B-Säule strömt die Luft dann zum Beispiel auf Brüstungshöhe in den Fondinnenraum. Solche Lüftungssysteme finden bei verschiedenen Kraftfahrzeug-Typen Anwendung.

Aus der DE 199 26 380 A1 ist ein Kanalübergang zur Überbrückung des Spaltes zwischen der Vordertür und der B-Säule durch ein in seiner Längsausdehnung verformbares und / oder bewegliches Kanalteil, insbesondere einen beweglichen Faltenbalg, bekannt. Durch das bewegliche Kanalteil wird eine bewegliche Dichtebene geschaffen, die bei geschlossener Tür den vorhandenen Spalt überbrückt und bei geöffneter Tür in eine zurückgezogene, das Ein- und Aussteigen nicht behindernde Position zurückgezogen ist. Das Betätigungsteil, mit welchem das Kanalteil verformt bzw. bewegt wird, ist als Hebel ausgebildet. Hierbei wirkt ein Hebelteil als Rahmen, in welchem eine Öffnung des verformbaren Kanalteils aufgespannt ist. Eine ähnliche Anordnung ist aus DE 199 26 380 A1 bekannt.

Nachteil bei diesem vorbekannten Luftkanal ist dessen aufwendige Konstruktion sowie der Verschleiß, der sich aus der Bewegung bzw. Verformung des Kanalteils bei jeder Türöffnung und -schließung ergibt. Ein weiterer Nachteil ist, dass die Tür dadurch relativ schwergängig wird. Ferner kann es bei dieser Konstruktion in erheblichem Maße zum Austritt von Falschluft in dem Fugenbereich kommen.

Aus den DE 103 22 878 A1 und DE 101 37 998 A1 sind weitere Rastverbindungsstrukturen bekannt.

DE 1929373 U, zeigt eine gattungsgemäße Verbindung zwischen zwei Luftkanälen.

Der Erfindung liegt dem gegenüber die Aufgabe zu Grunde, eine verbesserte Vorrichtung zur Verbindung von ersten und zweiten Luftkanälen zu schaffen sowie eine entsprechend verbesserte Kraftfahrzeug-Tür, eine Kraftfahrzeug-Säule und ein Kraftfahrzeug-Innenverkleidungsteil, insbesondere eine Instrumententafel.

Die der Erfindung zu Grunde liegenden Aufgaben werden jeweils mit den Merkmalen der unabhängigen Patentansprüche gelöst. Bevorzugte Ausführungsformen sind in den abhängigen Patentansprüchen angegeben.

Die erfindungsgemäße Vorrichtung hat ein Verbindungselement zur Überleitung eines Luftstroms zwischen zwei Luftkanälen, wobei für das Verbindungselement relativ zu dem einen der Luftkanäle verschiedene Rastpositionen gewählt werden können.

Von besonderem Vorteil ist dabei, dass aufgrund der verschiedenen zur Verfügung stehenden Rastpositionen ein Toleranzausgleich zwischen den Luftkanälen geschaffen werden kann. Dadurch kann die Dichtigkeit der Verbindung zwischen den beiden Luftkanälen verbessert werden. Aufgrund der verbesserten Dichtigkeit kann der Luftstrom mit im wesentlichen unverminderter Stärke von dem einen in den anderen Luftkanal übergeleitet werden, da es zu keinem oder fast keinem Verlust aufgrund des Austritts von sogenannter Falschluft im Bereich der Verbindung der beiden Luftkanäle kommt. Dies hat den weiteren Vorteil, dass aufgrund des Austritts von Falschluft auftretende Geräusche vermieden oder vermindert werden können.

Nach einer Ausführungsform der Erfindung hat das Verbindungselement eine Dichtung, die dazu ausgebildet ist, an einer Öffnung des zu verbindenden Luftkanals anzuliegen. Beispielsweise kann die Dichtung als umlaufende Dichtungslippe ausgebildet sein.

In einer Ausführungsform der Erfindung sind die miteinander zu verbindenden Luftkanäle relativ zueinander beweglich angeordnet. Beispielsweise kann einer der Luftkanäle relativ zu dem anderen Luftkanal schwenkbar sein. Wenn sich der schwenkbare Luftkanal in einer Schwenkposition befindet, so ist die Verbindung zwischen den beiden Luftkanälen getrennt. Wird der schwenkbare Luftkanal in eine Schließposition zurück geschwenkt, so verbindet das Verbindungselement lösbar die beiden Kanäle miteinander, so dass durch ein erneutes Aufschwenken die Verbindung wieder getrennt werden kann.

Die Schwenkachse kann dabei im wesentlichen vertikal verlaufen, beispielsweise wenn einer der Luftkanäle in einer Vordertür eines Kraftfahrzeugs angeordnet ist. Die Schwenkachse kann auch im wesentlichen horizontal verlaufen, wenn es sich z.B. um eine Heckklappe eines Kraftfahrzeugs handelt oder um die nach oben schwenkbare Vordertür eines Sportwagens.

Alternativ oder zusätzlich zu einer Schwenkbewegung können die Luftkanäle auch so angeordnet sein, dass sie relativ zueinander eine im wesentlichen translatorische Bewegung ausführen können, wie es z. B. bei einer Schiebetür eines Kleintransporters oder Mini-Vans der Fall sein kann.

Nach der Erfindung hat die Vorrichtung ein Befestigungselement zur Befestigung des Verbindungselements an einem der Luftkanäle. Zur Befestigung des Verbindungselements wird zunächst das Befestigungselement an dem Luftkanal befestigt. Dies kann beispielsweise durch eine Klebung, Verschweißung oder durch eine Schnappverbindung erfolgen.

Durch das an dem Luftkanal befestigte Befestigungselement werden die verschiedenen Rastpositionen für das Verbindungselement festgelegt. Beispielsweise kann das Verbindungselement innerhalb des Befestigungselements in die verschiedenen Rastpositionen gebracht werden. Vorzugsweise wird dabei eine Rastposition so gewählt, dass eine Toleranz hinsichtlich der Positionierung der miteinander zu verbindenden Luftkanäle vermindert bzw. ausgeglichen wird.

Nach einer Ausführungsform der Erfindung hat das Befestigungselement für jede der Rastpositionen zumindest ein Rastelement. Dadurch kann mit dem Verbindungselement in der jeweils gewählten Rastposition eine Schnappverbindung gebildet werden. Vorzugsweise ist diese Schnappverbindung lösbar.

In einer Ausführungsform der Erfindung hat das Verbindungselement zumindest einen Schnapphaken, um die Schnappverbindung in der gewählten Rastposition mit dem Befestigungselement einzugehen.

In einer Ausführungsform der Erfindung hat das Befestigungselement eine Führung für zumindest ein Arretierungselement zur Arretierung der Schnappverbindung, die zwischen dem Befestigungselement und dem Verbindungselement besteht. Durch das Arretierungselement wird in einer Arretierungsposition der Schnapphaken blockiert, so dass er nicht aus seiner Rastposition kommen kann.

Wenn das Arretierungselement entlang der Führung in eine Freigabeposition verschoben worden ist, wird dadurch der Schnapphaken freigegeben, so dass er aus seiner Rastposition ausrasten kann und das Verbindungselement in eine andere Rastposition geschoben werden kann, wo der Schnapphaken erneut einrastet. Nachdem das Verbindungselement auf diese Art und Weise in die gewählte Rastposition gebracht worden ist, wird das Arretierungselement wieder in eine Arretierungsposition gebracht, um den Schnapphaken in der gewählten Rastposition zu blockieren.

In einer Ausführungsform der Erfindung wird die Führung für das Arretierungselement durch einen Steg des Befestigungselements abgeschlossen. Der Steg hat ein Anschlagselement zur Bildung eines Anschlags mit dem Arretierungselement in der Freigabeposition. Durch das Anschlagselement kann verhindert werden, dass das Arretierungselement beim Verschieben in die Freigabeposition aus der Führung hinausfällt.

Nach einer Ausführungsform der Erfindung hat das Arretierungselement einen Führungsschlitz, in den das Anschlagselement eingreifen kann. Dadurch erhält das Anschlagselement eine doppelte Funktion: Einerseits bildet es eine zusätzliche Gleitfläche für die Führung des Arretierungselements für dessen Verschiebung zwischen der Arretierungsposition und der Freigabeposition, um so ein Verkanten innerhalb der Führung zu vermeiden. Andererseits bildet das Anschlagselement mit einem Ende des Führungsschlitzes einen Endanschlag, durch den die Freigabeposition definiert ist.

In einer Ausführungsform der Erfindung hat das Arretierungselement ein Anschlagselement zur Bildung eines Anschlags in der Arretierungsposition. Hierdurch wird die Arretierungsposition eindeutig festgelegt und es wird vermieden, dass das Arretierungselement über die Arretierungsposition hinaus entlang der Führung verschoben werden kann. Neben der eindeutigen Festlegung der Arretierungsposition dient also dieses Anschlagselement dazu, ein Herausfallen des Arretierungselements aus der Führung zu verhindern.

In einer Ausführungsform der Erfindung verläuft einer der Luftkanäle in einer Kraftfahrzeug-Tür, beispielsweise in der Fahrertür oder in der Beifahrertür. Über die erfindungsgemäße Vorrichtung wird dieser Luftkanal mit einem in der sogenannten B-Säule des Kraftfahrzeugs gebildeten Luftkanal verbunden, wenn die Kraftfahrzeug-Tür geschlossen ist.

Von besonderem Vorteil ist dabei, dass die im Allgemeinen relativ große Toleranz der Position der B-Säule relativ zu der Fahrer- bzw. Beifahrertür durch das erfindungsgemäße Verbindungselement zumindest teilweise ausgeglichen werden kann, indem hierzu eine entsprechende Rastposition für das Verbindungselement gewählt wird. Dadurch wird das Austreten von Falschluft im Bereich des Übergangs zwischen der Kraftfahrzeug-Tür und der B-Säule reduziert oder ganz verhindert, so dass der für die Belüftung, Klimatisierung und / oder Beheizung des Fondinnenraums zur Verfügung stehende Luftstrom dementsprechend im wesentlichen unvermindert den Fondinnenraums erreichen kann.

Die vorliegende Erfindung kann beispielsweise auch für die Verbindung des Luftkanals in einer Instrumententafel mit dem in der Fahrer- oder Beifahrertür verlaufenden Luftkanal verwendet werden.

In einem weiteren Aspekt betrifft die Erfindung eine Kraftfahrzeug-Tür, die einen Luftkanal aufweist, der mit einem erfindungsgemäßen Verbindungselement abgeschlossen ist. Das erfindungsgemäße Verbindungselement ermöglicht es, die Kraftfahrzeug-Tür komplett vormontiert an eine Fertigungsstraße zu liefern. Nach dem Einbau der Kraftfahrzeug-Tür in die Rohkarosserie erfolgt dann ein Toleranzausgleich durch Wahl einer entsprechenden Rastposition für das Verbindungselement.

In einem weiteren Aspekt betrifft die Erfindung eine Kraftfahrzeug-Säule, die ein erfindungsgemäßes Verbindungselement aufweist. In diesem Fall erfolgt der Toleranzausgleich durch Wahl einer entsprechenden Rastposition des Verbindungselements relativ zu der Kraftfahrzeug-Säule, insbesondere der B-Säule.

In einem weiteren Aspekt betrifft die Erfindung ein Kraftfahrzeug-Innenverkleidungsteil, welches einen Luftkanal hat oder bildet. Zur Verbindung dieses Luftkanals mit einem anderen Luftkanal hat das Kraftfahrzeug-Innenverkleidungsteil ein erfindungsgemäßes Verbindungselement. Bei dem Kraftfahrzeug-Innenverkleidungsteil kann es sich um eine Instrumententafel handeln, die in einem Randbereich eine Austrittsöffnung ihres Luftkanals hat, der bei geschlossener Fahrer- bzw. Beifahrertür mit dem in der Tür verlaufenden Luftkanal verbunden werden muss.

Im weiteren werden Ausführungsformen der Erfindung mit Bezugnahme auf die Zeichnungen näher erläutert. Es zeigen:
- Figur 1: einen Querschnitt durch eine Ausführungsform eines erfindungsge- mäßen Verbindungselements zur Verbindung von zwei Luftkanälen,
- Figur 2: eine perspektivische Explosionsansicht einer Ausführungsform eines erfindungsgemäßen Verbindungselements mit Arretierungselemen- ten,
- Figur 3: einen Teilquerschnitt einer Ausführungsform eines erfindungsgemä- ßen Verbindungselements mit einer Darstellung von verschiedenen Rastpositionen,
- Figur 4: eine perspektivische Ansicht des Verbindungselements der Figuren 2 und 3,
- Figur 5: eine schematische Draufsicht auf ein Kraftfahrzeug mit zumindest einem erfindungsgemäßen Verbindungselement zur Überleitung ei- nes Luftstroms zwischen Luftkanälen.

Elemente in den nachfolgenden Figuren, die einander entsprechen, sind mit denselben Bezugszeichen gekennzeichnet.

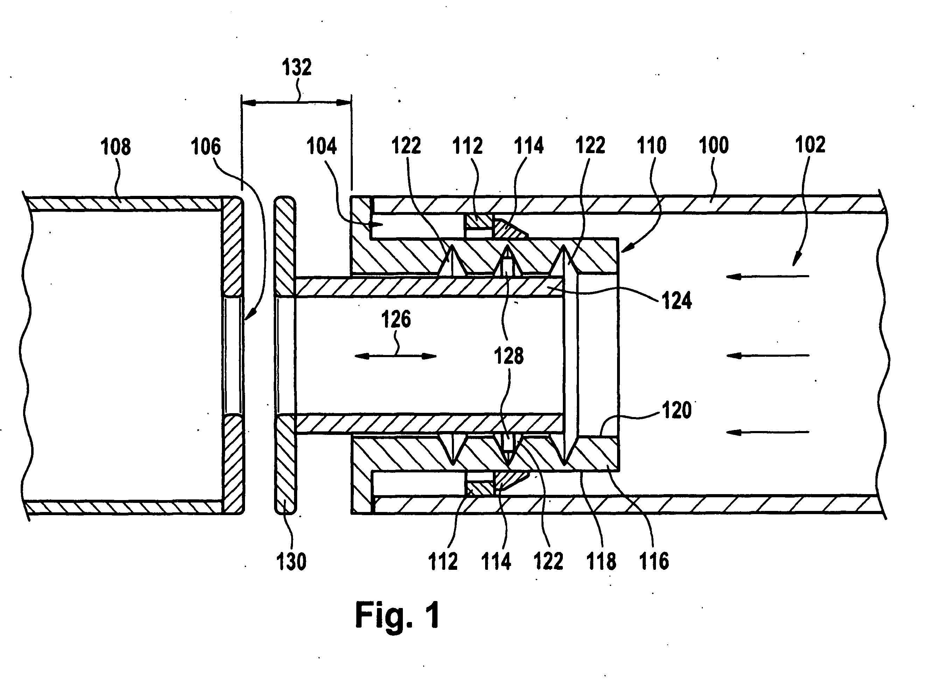

Die Figur 1 zeigt einen Luftkanal 100 der zur Leitung eines Luftstroms 102 dient. Der Luftstrom 102 wird beispielsweise von dem Gebläse eines Kraftfahrzeugs erzeugt.

Der Luftkanal 100 hat eine Öffnung 104. Gegenüber der Öffnung 104 befindet sich eine Öffnung 106 eines weiteren Luftkanals 108, in dem der Luftstrom 102 mit möglichst geringen oder keinen Verlusten übergeleitet werden soll. Hierzu ist eine Vorrichtung 110 in der Öffnung 104 des Luftkanals 100 befestigt. Zur Befestigung der Vorrichtung 110 hat der Luftkanal 100 nahe seiner Öffnung 104 ein oder mehrere Rastelemente 112, die mit entsprechenden Rastelementen 114 der Vorrichtung 110 Schnappverbindungen zur Befestigung der Vorrichtung 110 in der Öffnung 104 des Luftkanals 100 bilden können.

Die Vorrichtung 110 hat ein Befestigungselement 116, an dessen Außenseite 118 die Rastelemente 114 angeordnet sind. An seiner Innenseite 120 hat das Befestigungselement 116 verschiedene rillenförmige Ausnehmungen 122, durch die verschiedene Rastpositionen eines Verbindungselements 124 definiert werden. Bei der hier betrachteten Ausführungsform handelt es sich um drei Rastpositionen; es können aber auch mehr oder weniger Rastpositionen durch eine entsprechende Anzahl von Rillen definiert werden.

Das Verbindungselement 124 hat einen kleineren Querschnitt als das Befestigungselement 116, so dass es in das Befestigungselement 116 in Pfeilrichtung 126 hineingeschoben und verschoben werden kann. An seiner Außenseite hat das Verbindungselement 124 Rastelemente 128, die zum Einrasten in die Ausnehmungen 122 ausgebildet sind.

Das Verbindungselement 124 hat eine Dichtung 130, die beispielsweise als umlaufende Dichtungslippe ausgebildet ist. Die Dichtung 130 ist so angeordnet, dass sie der Öffnung 106 des Luftkanals 108 gegenüberliegt.

Durch Verschiebung des Verbindungselements 124 in Pfeilrichtung 126 kann die Dichtung 130 so positioniert werden, dass ein Spalt 132 zwischen dem Luftkanal 100 und dem Luftkanal 108 möglichst vollständig überbrückt wird und die Dichtung 130 an der Öffnung 106 anliegt. In der so gewählten Rastposition rasten die Rastelemente 128 in die entsprechenden Ausnehmungen 122 ein.

In dem hier betrachteten Ausführungsbeispiel sind durch die Ausnehmungen 122 drei verschiedene Rastpositionen definiert. Statt dessen können auch lediglich zwei verschiedene Rastpositionen zur Positionierung des Verbindungselements 124 relativ zu dem Luftkanal 100 definiert sein oder eine größere Anzahl von Rastpositionen durch eine entsprechend größere Anzahl von Ausnehmungen, um eine genauere Einstellbarkeit des Verbindungselements 124 zu ermöglichen.

Zur Montage kann so vorgegangen werden, dass zunächst das Befestigungselement 116 in die Öffnung 104 des Luftkanals 100 eingeführt wird, so dass die Rastelemente 112 und 114 eine Schnappverbindung eingehen. Dadurch ist die Position des Befestigungselements 116 relativ zu dem Luftkanal 100 festgelegt.

Im nächsten Schritt wird das Verbindungselement 124 in das Befestigungselement 116 eingeführt und dort in die gewünschte Rastposition gebracht.

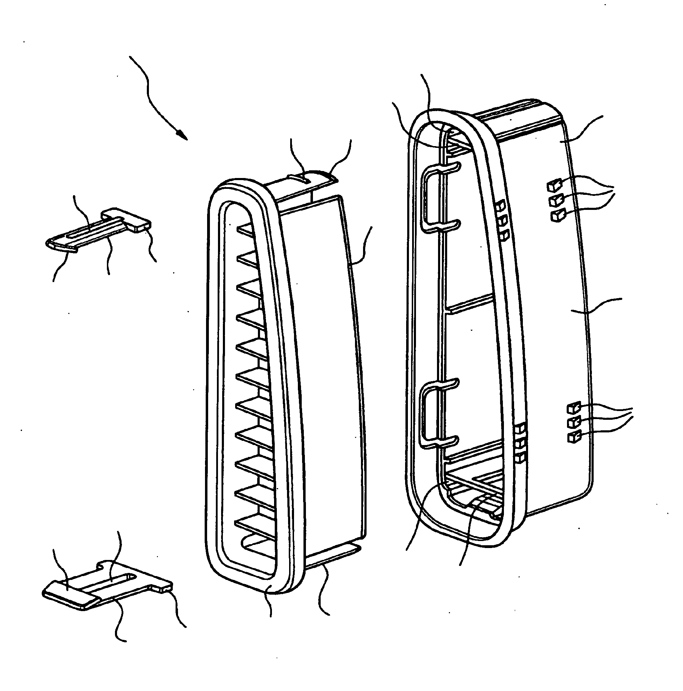

Die Figur 2 zeigt eine Ausführungsform einer erfindungsgemäßen Vorrichtung 110 in einer perspektivischen Explosionsansicht.

In der hier betrachteten Ausführungsform sind die Rastelemente 128 des Verbindungselements 124 an zwei aneinander gegenüberliegenden Schnapphaken 134 angeordnet.

In dem Befestigungselement 116 sind Führungen 136 und 138 ausgebildet, die jeweils durch einen Steg 140 bzw. 142 abgeschlossen werden. Die Führungen 136 und 138 dienen zur Aufnahme von Arretierungselementen 144 bzw. 146. Die Arretierungselemente 144 und 146 haben jeweils eine Basis 148, die eine im wesentlichen rechteckige Form hat und die mit ihren Seitenbereichen in die jeweiligen Führungen 136 bzw. 138 eingreifen kann. Auf der der Basis 148 gegenüberliegenden Seite werden die Arretierungen 144 und 146 jeweils durch ein Anschlagselement 150 abgeschlossen. Das Anschlagselement 150 ist in der hier betrachteten Ausführungsform im wesentlichen keilförmig. In der Mitte der Arretierungselemente 140 und 146 verläuft jeweils ein Führungsschlitz 152, der sich jeweils von dem Anschlagselement 150 bis in die Basis 148 hinein erstreckt.

Zur Montage der Vorrichtung 110 kann so vorgegangen werden, dass zunächst die Arretierungselemente 144 und 146 in die Führungen 136 bzw. 138 geschoben werden. Danach wird das Verbindungselement 124 in das Befestigungselement 116 geschoben, wobei die Schnapphaken 134 oberhalb des Arretierungselements 144 bzw. unterhalb des Arretierungselements 146 bewegt werden. Dabei verrasten die Schnapphaken 134 mit deren Rastelementen 128 in den Ausnehmungen 122 (vgl. Figur 1). Aufgrund der Arretierungselemente 144 bzw. 146 sind die Schnapphaken 134 blockiert, so dass das Verbindungselement 124 nicht mehr innerhalb des Befestigungselements 116 verschoben werden kann.

Zur Wahl einer anderen Rastposition werden die Arretierungselemente 144 und 146 aus den Führungen 136 bzw. 138 herausgezogen, wodurch die Blockade der Schnapphaken 134 gelöst wird. Aufgrund dessen kann das Verbindungselement 124 innerhalb des Befestigungselements 116 in die gewünschte Rastposition verschoben werden. Sobald sich das Verbindungselement 124 in der gewünschten Rastposition befindet, werden die Arretierungen 144 und 146 wieder entlang der Führung 136 bzw. 138 in die jeweilige Arretierungsposition zurückgeschoben.

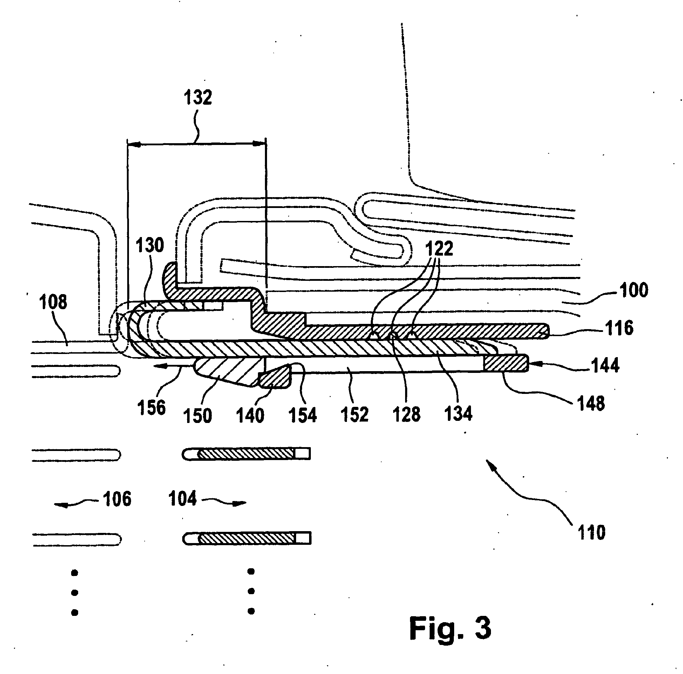

Die Figur 3 zeigt eine Detailansicht der Vorrichtung 110 in einer Einbauposition entsprechend der Darstellung der Figur 1, wobei nur der obere Bereich im Bereich der Führung 136 (vgl. Figur 2) dargestellt ist.

Wie in der Figur 3 gezeigt, hat der Steg 140 mittig ein Anschlagselement 154, welches in den Führungsschlitz 152 des Arretierungselements 144 eingreift. In seiner in der Figur 3 dargestellten Position befindet sich das Arretierungselement 144 in einer Arretierungsposition, in der der Schnapphaken 134 blockiert ist. Diese Arretierungsposition wird durch einen von dem Anschlagselement 150 des Arretierungselements 144 mit einer vorderen Stirnfläche des Stegs 140 definiert.

Wenn das Arretierungselement 144 in Pfeilrichtung 156 aus der Führung 136 herausgezogen wird, gleitet das Anschlagselement 154 durch den Führungsschlitz 152 bis es in der Freigabeposition an der Basis 148 einen Anschlag bildet. In der Freigabeposition kann das Verbindungselement 124 innerhalb des Befestigungselements 116 in eine durch die Ausnehmungen 122 festgelegte Rastposition verschoben werden. In dem hier betrachteten Ausführungsbeispiel sind durch die Ausnehmungen 122 drei verschiedene Rastpositionen definiert, wobei zur Überbrückung des Spalts 132 hier eine mittlere Rastposition gewählt worden ist. Die anderen beiden zur Verfügung stehenden Rastpositionen sind in der Figur 3 durch gestrichelte Linien zur Darstellung der entsprechenden Positionen der Dichtung 130 und des Schnapphakens 134 dargestellt.

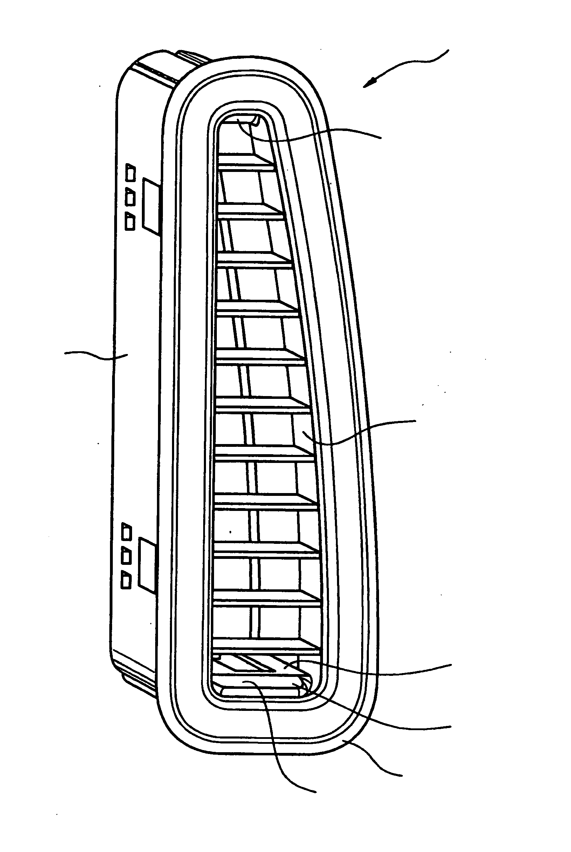

Die Figur 4 zeigt die Vorrichtung 110 in zusammengebautem Zustand. In dem zusammengebauten Zustand ist das Verbindungselement 124 in einer der definierten Rastpositionen mit dem Befestigungselement 116 verrastet. Die Arretierungselemente 144 und 146 befinden sich in deren jeweiliger Arretierungsposition, wobei Anschläge der Anschlagselemente 150 mit dem Steg 140 bzw. 142 gebildet werden.

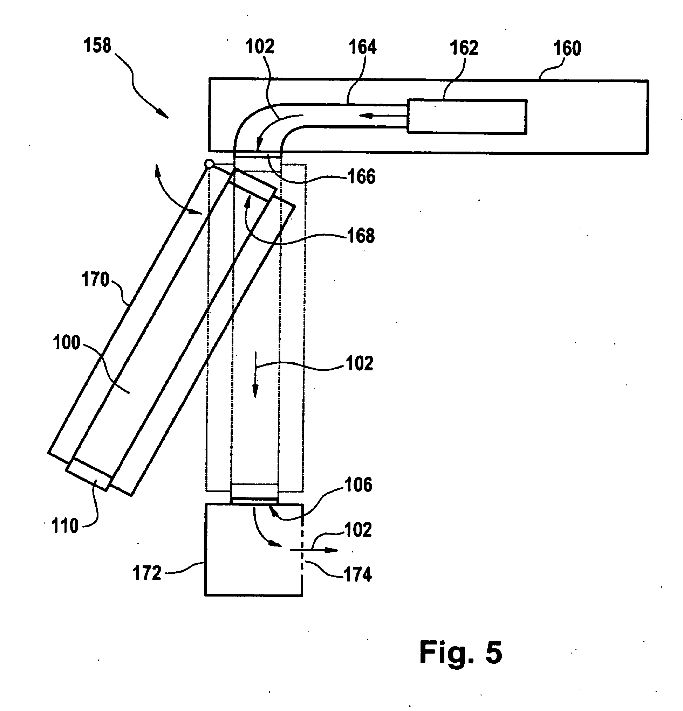

Die Figur 5 zeigt eine schematische Draufsicht auf ein Kraftfahrzeug 158. Das Kraftfahrzeug 158 hat eine Instrumententafel 160 unterhalb derer sich ein Gebläse 162 einer Kraftfahrzeug-Heizung und / oder Klimaanlage befindet. Von dem Gebläse 162 führt ein Luftkanal 164 zu einer Öffnung 166 der Instrumententafel 160. Die Öffnung 166 der Instrumententafel 160 ist so angeordnet, dass sie gegenüber einer Öffnung 168 einer Kraftfahrzeug-Tür 170 liegt, wenn diese geschlossen ist. Innerhalb der Kraftfahrzeug-Tür 170 verläuft ein Luftkanal 100, der von einer Vorrichtung 110 abgeschlossen wird. Bei geschlossener Kraftfahrzeug-Tür 170 liegt die Vorrichtung 110 gegenüber einer Öffnung 106 einer B-Säule 172 des Kraftfahrzeugs 158. An der B-Säule 172 sind Lüftungsschlitze 174 angeordnet, durch die ein von dem Gebläse 162 erzeugter Luftstrom 102 in den Kraftfahrzeug-Innenraum strömen kann.

Zur Montage des Kraftfahrzeugs 158 wird beispielsweise wie folgt vorgegangen: Zunächst wird die Karosserie des Kraftfahrzeugs 158 hergestellt. Die Karosserie hat insbesondere hinsichtlich der Position des B-Säule 172 relativ große Toleranzen, die im Bereich von einigen Millimetern liegen können.

Die Kraftfahrzeug-Tür 170 wird als komplette Einheit an die Fertigungsstraße geliefert und in dem Kraftfahrzeug 158 montiert. Erforderlichenfalls kann ein Toleranzausgleich zur Abdichtung des Spalts 132 (vgl. Figur 1 und Figur 3) vorgenommen werden, indem das Verbindungselement 124 (vgl. Figuren 1 bis 4) in eine entsprechende Rastposition gebracht wird.

Bei der Ausführungsform der Vorrichtung 110 gemäß den Figuren 2 bis 4 werden hierzu zunächst die Arretierungselemente 144 und 146 aus den Führungen 136 bzw. 138 herausgezogen, bis die jeweiligen Basen 148 mit den an den Stegen 140 und 142 angeordneten Anschlagselementen 154 einen Anschlag bilden. Dadurch werden die Schnapphaken 134 freigegeben, so dass das Verbindungselement 124 in die gewünschte Rastposition geschoben werden kann, so dass der Spalt 132 abgedichtet wird. Danach werden die Arretierungselement 144, 146 wieder in deren Arretierungspositionen verschoben.

Alternativ oder zusätzlich kann die Vorrichtung 110 auch an der Öffnung 168 der Kraftfahrzeug-Tür 170, der Öffnung 166 der Instrumententafel 160 und / oder an der Öffnung 106 der B-Säule 172 angeordnet sein, um dort entsprechende Toleranzausgleiche schaffen zu können.

Die Erfindung ist keinesfalls auf zueinander schwenkbare Luftkanäle beschränkt. Die erfindungsgemäße Vorrichtung 110 kann auch zum Beispiel für eine Heckklappe, die Schiebetür eines Kleintransporters, Mini-Vans oder dergleichen eingesetzt werden.

### Bezugszeichenliste

- 100: Luftkanal
- 102: Luftstrom
- 104: Öffnung
- 106: Öffnung
- 108: Luftkanal
- 110: Vorrichtung
- 112: Rastelement
- 114: Rastelement
- 116: Befestigungselement
- 118: Außenseite
- 120: Innenseite
- 122: Ausnehmungen
- 124: Verbindungselement
- 126: Pfeilrichtung
- 128: Rastelement
- 130: Dichtung
- 132: Spalt
- 134: Schnapphaken
- 136: Führung
- 138: Führung
- 140: Steg
- 142: Steg
- 144: Arretierungselement
- 146: Arretierungselement
- 148: Basis
- 150: Anschlagselement
- 152: Führungsschlitz
- 154: Anschlagselement
- 156: Pfeilrichtung
- 158: Kraftfahrzeug
- 160: Instrumententafel
- 162: Gebläse
- 164: Luftkanal
- 166: Öffnung
- 168: Öffnung
- 170: Kraftfahrzeug-Tür
- 172: B-Säule
- 174: Lüftungsschlitze

## Patentansprüche

1. Kraftfahrzeug-Tür mit einem ersten Luftkanal (108) und einer Vorrichtung zur Verbindung des ersten und eines zweiten Luftkanals (100, 108) wobei der erste Luftkanal innerhalb der Kraftfahrzeug-Tür verläuft, mit einem Verbindungselement (124) zur Überleitung eines Luftstroms (102) zwischen den Luftkanälen, **dadurch gekennzeichnet, dass** das Verbindungselement relativ zu dem ersten Luftkanal verschiedene Rastpositionen (122, 128) einnehmen kann, und mit einem Befestigungselement (116) zur Befestigung des Verbindungselements an dem ersten Luftkanal, wobei durch das Befestigungselement die verschiedenen Rastpositionen festgelegt sind.

2. Kraftfahrzeug-Tür nach Anspruch 1, wobei das Verbindungselement eine Dichtung (130) aufweist, die dazu ausgebildet ist, an einer Öffnung (106) des zweiten Luftkanals anzuliegen.

3. Kraftfahrzeug-Tür nach Anspruch 2, wobei die Dichtung als Dichtungslippe ausgebildet ist.

4. Kraftfahrzeug-Tür nach Anspruch 1, 2 oder 3, wobei zumindest einer der ersten und zweiten Luftkanäle schwenkbar ist, wobei die ersten und zweiten Luftkanäle in einer Schwenkposition voneinander getrennt sind.

5. Kraftfahrzeug-Tür nach einem der vorhergehenden Ansprüche, wobei das Befestigungselement zur Bildung einer ersten Schnappverbindung (112, 114) mit dem ersten Luftkanal ausgebildet ist.

6. Kraftfahrzeug-Tür nach einem der vorhergehenden Ansprüche, wobei das Befestigungselement für jede der Rastpositionen zumindest ein Rastelement (122) aufweist, um mit dem Verbindungselement in einer gewählten Rastposition eine zweite Schnappverbindung (122, 128) zu bilden.

7. Kraftfahrzeug-Tür nach Anspruch 6, wobei das Verbindungselement zumindest einen Schnapphaken (128, 134) aufweist, um die zweite Schnappverbindung mit dem Rastelement der gewählten Rastposition einzugehen.

8. Kraftfahrzeug-Tür nach Anspruch 6 oder 7, wobei das Befestigungselement eine Führung (136, 138) für zumindest ein Arretierungselement (144, 146) zur Arretierung der zweiten Schnappverbindung aufweist, wobei das Arretierungselement in einer Arretierungsposition einen Schnapphaken (128, 134) blockiert, und das Arretierungselement entlang der Führung in eine Freigabeposition zur Freigabe des Schnapphakens verschiebbar ist.

9. Kraftfahrzeug-Tür nach Anspruch 8, wobei die Führung durch einen Steg (140, 142) abgeschlossen wird und an dem Steg ein erstes Anschlagselement (154) zur Bildung eines Anschlags mit dem Arretierungselement in der Freigabeposition angeordnet ist.

10. Kraftfahrzeug-Tür nach Anspruch 9, wobei das Arretierungselement einen Führungsschlitz (152) aufweist und das erste Anschlagselement in den Führungsschlitz eingreift.

11. Kraftfahrzeug-Tür nach Anspruch 8, 9 oder 10, wobei das Arretierungselement ein zweites Anschlagselement (150) zur Bildung eines zweiten Anschlags in der Arretierungsposition aufweist.

12. Kraftfahrzeug-Tür nach Anspruch 11, wobei der zweite Anschlag an einem Steg (140, 142) gebildet wird, durch den die Führung (136, 138) abgeschlossen wird.

13. Kraftfahrzeug-Tür nach einem der vorhergehenden Ansprüche, wobei zwischen zwei und zehn Rastpositionen, vorzugsweise drei Rastpositionen vorgesehen sind.

14. Kraftfahrzeug-Tür nach einem der vorhergehenden Ansprüche, wobei der erste Luftkanal innerhalb der Kraftfahrzeug-Tür verläuft.

15. Kraftfahrzeug-Tür nach einem der vorhergehenden Ansprüche, wobei das Verbindungselement an einer in Einbauposition einer B-Säule (172) gegenüberliegenden Seite der Kraftfahrzeug-Tür angeordnet ist.

16. Kraftfahrzeug-Säule mit einem zweiten Luftkanal (106) und einer Vorrichtung zur Verbindung eines ersten und des zweiten Luftkanals (100, 108) wobei der erste Luftkanal innerhalb der Kraftfahrzeug-Tür verläuft, mit einem Verbindungselement (124) zur Überleitung eines Luftstroms (102) zwischen den Luftkanälen, **dadurch gekennzeichnet, dass** das Verbindungselement relativ zu dem zweiten Luftkanal verschiedene Rastpositionen (122, 128) einnehmen kann, und mit einem Befestigungselement (116) zur Befestigung des Verbindungselements an dem zweiten Luftkanal, wobei durch das Befestigungselement die verschiedenen Rastpositionen festgelegt sind.

17. Kraftfahrzeug-Innenverkleidungsteil mit einem ersten Luftkanal (108) und einer Vorrichtung zur Verbindung des ersten und eines zweiten Luftkanals (100, 108) wobei der erste Luftkanal innerhalb der Kraftfahrzeug-Tür verläuft, mit einem Verbindungselement (124) zur Überleitung eines Luftstroms (102) zwischen den Luftkanälen, **dadurch gekennzeichnet, dass** das Verbindungselement relativ zu dem ersten Luftkanal verschiedene Rastpositionen (122, 128) einnehmen kann, und mit einem Befestigungselement (116) zur Befestigung des Verbindungselements an dem ersten Luftkanal, wobei durch das Befestigungselement die verschiedenen Rastpositionen festgelegt sind.

18. Kraftfahrzeug-Innenverkleidungsteil nach Anspruch 17, wobei es sich bei dem Kraftfahrzeug-Innenverkleidungsteil um eine Instrumententafel (160) handelt.

## Claims

1. Motor vehicle door with a first air duct (108) and a device for connecting the first and a second air duct (100, 108), the first air duct running within the motor vehicle door, to a connecting element (124) for conducting an air flow (102) between the air ducts, **characterized in that** the connecting element can take up various latching positions (122, 128) relative to the first air duct, and with a fastening element (116) for fastening the connecting element to the first air duct, the various latching positions being fixed by the fastening element.

2. Motor vehicle door according to Claim 1, wherein the connecting element has a seal (130) which is designed for bearing against an opening (106) of the second air duct.

3. Motor vehicle door according to Claim 2, wherein the seal is designed as a sealing lip.

4. Motor vehicle door according to Claim 1, 2 or 3, wherein at least one of the first and second air ducts is pivotable, and wherein the first and second air ducts are separated from each other in a pivoted position.

5. Motor vehicle door according to one of the preceding claims, wherein the fastening element is designed for forming a first snap-in connection (112, 114) with the first air duct.

6. Motor vehicle door according to one of the preceding claims, wherein the fastening element has at least one latching element (122) for each of the latching positions in order to form a second snap-in connection (122, 128) with the connecting element in a selected latching position.

7. Motor vehicle door according to Claim 6, wherein the connecting element has at least one snap-in hook (128, 134) in order to undertake the second snap-in connection with the latching element in the selected latching position.

8. Motor vehicle door according to Claim 6 or 7, wherein the fastening element has a guide (136, 138) for at least one locking element (144, 146) for locking the second snap-in connection, wherein the locking element blocks a snap-in hook (128, 134) in a locking position, and the locking element is displaceable along the guide into a release position in order to release the snap-in hook.

9. Motor vehicle door according to Claim 8, wherein the guide is closed by a web (140, 142), and a first stop element (154) for forming a stop with the locking element in the release position is arranged on the web.

10. Motor vehicle door according to Claim 9, wherein the locking element has a guide slot (152), and the first stop element engages in the guide slot.

11. Motor vehicle door according to Claim 8, 9 or 10, wherein the locking element has a second stop element (150) for forming a second stop in the locking position.

12. Motor vehicle door according to Claim 11, wherein the second stop is formed on a web (140, 142) by means of which the guide (136, 138) is closed.

13. Motor vehicle door according to one of the preceding claims, wherein between two and ten latching positions, preferably three latching positions, are provided.

14. Motor vehicle door according to one of the preceding claims, wherein the first air duct runs within the motor vehicle door.

15. Motor vehicle door according to one of the preceding claims, wherein the connecting element is arranged on a side of the motor vehicle door that lies opposite a B pillar (172) in the fitted position.

16. Motor vehicle pillar with a second air duct (106) and a device for connecting a first and the second air duct (100, 108), the first air duct running within the motor vehicle door, to a connecting element (124) for conducting an air flow (102) between the air ducts, **characterized in that** the connecting element can take up various latching positions (122, 128) relative to the second air duct, and with a fastening element (116) for fastening the connecting element to the second air duct, the various latching positions being fixed by the fastening element.

17. Motor vehicle inner lining part with a first air duct (108) and a device for connecting the first and a second air duct (100, 108), the first air duct running within the motor vehicle door, to a connecting element (124) for conducting an air flow (102) between the air ducts, **characterized in that** the connecting element can take up various latching positions (122, 128) relative to the first air duct, and with a fastening element (116) for fastening the connecting element to the first air duct, the various latching positions being fixed by the fastening element.

18. Motor vehicle inner lining part according to Claim 17, the motor vehicle inner lining part being an instrument panel (160).

## Revendications

1. Porte de véhicule automobile avec une première conduite d'air (108) et un dispositif pour raccorder la première et une deuxième conduites d'air (100, 108), dans laquelle la première conduite d'air s'étend à l'intérieur de la porte de véhicule automobile, avec un élément de raccordement (124) pour la transmission d'un courant d'air (102) entre les conduites d'air, **caractérisée en ce que** l'élément de raccordement peut prendre différentes positions d'encliquetage (122, 128) par rapport à la première conduite d'air, et avec un élément de fixation (116) pour la fixation de l'élément de raccordement sur la première conduite d'air, dans laquelle les différentes positions d'encliquetage sont fixées au moyen de l'élément de fixation.

2. Porte de véhicule automobile selon la revendication 1, dans laquelle l'élément de raccordement présente un joint d'étanchéité (130), qui est configuré pour s'appliquer sur une ouverture (106) de la deuxième conduite d'air.

3. Porte de véhicule automobile selon la revendication 2, dans laquelle le joint d'étanchéité se présente sous la forme d'une lèvre d'étanchéité.

4. Porte de véhicule automobile selon la revendication 1, 2 ou 3, dans laquelle au moins une des première et deuxième conduites d'air est pivotante, dans laquelle les première et deuxième conduites d'air sont séparées l'une de l'autre dans une position de pivotement.

5. Porte de véhicule automobile selon l'une quelconque des revendications précédentes, dans laquelle l'élément de fixation est réalisé de façon à former un premier assemblage à déclic (112, 114) avec la première conduite d'air.

6. Porte de véhicule automobile selon l'une quelconque des revendications précédentes, dans laquelle l'élément de fixation présente au moins un élément d'encliquetage (122) pour chacune des positions d'encliquetage, afin de former un deuxième assemblage à déclic (122, 28) avec l'élément de raccordement dans une position d'encliquetage choisie.

7. Porte de véhicule automobile selon la revendication 6, dans laquelle l'élément de raccordement présente au moins un crochet à déclic (128, 134), pour former le deuxième assemblage à déclic avec l'élément d'encliquetage de la deuxième position d'encliquetage choisie.

8. Porte de véhicule automobile selon la revendication 6 ou 7, dans laquelle l'élément de fixation présente un guide (136, 138) pour au moins un élément de blocage (144, 146) destiné à bloquer le deuxième assemblage à déclic, dans laquelle l'élément de blocage bloque un crochet à déclic (128, 134) dans une position de blocage, et l'élément de blocage est déplaçable dans une position de libération le long du guide pour libérer le crochet à déclic.

9. Porte de véhicule automobile selon la revendication 8, dans laquelle le guide est terminé par une nervure (140, 142) et un premier élément de butée (154) est disposé sur la nervure pour former une butée avec l'élément de blocage dans la position de libération.

10. Porte de véhicule automobile selon la revendication 9, dans laquelle l'élément de blocage présente une fente de guidage (152) et le premier élément de butée s'engage dans la fente de guidage.

11. Porte de véhicule automobile selon la revendication 8, 9 ou 10, dans laquelle l'élément de blocage présente un deuxième élément de butée (150) pour former une deuxième butée dans la position de blocage.

12. Porte de véhicule automobile selon la revendication 11, dans laquelle la deuxième butée est formée sur une nervure (140, 142), par laquelle le guide (136, 138) se termine.

13. Porte de véhicule automobile selon l'une quelconque des revendications précédentes, dans laquelle il est prévu entre deux et dix positions d'encliquetage, de préférence trois positions d'encliquetage.

14. Porte de véhicule automobile selon l'une quelconque des revendications précédentes, dans laquelle la première conduite d'air s'étend à l'intérieur de la porte de véhicule automobile.

15. Porte de véhicule automobile selon l'une quelconque des revendications précédentes, dans laquelle l'élément de raccordement est disposé sur un côté de la porte de véhicule automobile opposé à une colonne B (172) dans la position de montage.

16. Colonne de véhicule automobile avec une deuxième conduite d'air (106) et un dispositif pour raccorder une première et la deuxième conduites d'air (100, 108), dans laquelle la première conduite d'air s'étend à l'intérieur de la porte de véhicule automobile, avec un élément de raccordement (124) pour la transmission d'un courant d'air (102) entre les conduites d'air, **caractérisée en ce que** l'élément de raccordement peut prendre différentes positions d'encliquetage (122, 128) par rapport à la deuxième conduite d'air, et avec un élément de fixation (116) pour la fixation de l'élément de raccordement sur la deuxième conduite d'air, dans laquelle les différentes positions d'encliquetage sont fixées au moyen de l'élément de fixation.

17. Elément d'habillage intérieur de véhicule automobile avec une première conduite d'air (108) et un dispositif pour raccorder la première et une deuxième conduites d'air (100, 108), dans lequel la première conduite d'air s'étend à l'intérieur de la porte de véhicule automobile, avec un élément de raccordement (124) pour la transmission d'un courant d'air (102) entre les conduites d'air, **caractérisé en ce que** l'élément de raccordement peut prendre différentes positions d'encliquetage (122, 128) par rapport à la première conduite d'air, et avec un élément de fixation (116) pour la fixation de l'élément de raccordement sur la première conduite d'air, dans lequel les différentes positions d'encliquetage sont fixées au moyen de l'élément de fixation.

18. Elément d'habillage intérieur de véhicule automobile selon la revendication 17, dans lequel l'élément d'habillage intérieur de véhicule automobile est un tableau de bord (160).
